Europäisches Patentamt

European Patent Office

Office européen des brevets

(19)

(11) **EP 1 284 562 A1**

(12) **EUROPÄISCHE PATENTANMELDUNG**

(43) Veröffentlichungstag:
**19.02.2003 Patentblatt 2003/08**

(51) Int Cl.[7]: **H04L 25/02, H04B 7/08**

(21) Anmeldenummer: **01440265.5**

(22) Anmeldetag: **16.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ALCATEL**
**75008 Paris (FR)**

(72) Erfinder: **Braun, Volker**
**70178 Stuttgart (DE)**

(74) Vertreter: **Rausch, Gabriele, Dr. et al**
**Alcatel**
**Intellectual Property Department, Stuttgart**
**70430 Stuttgart (DE)**

(54) **Verfahren, Empfänger und Empfangsstation zum Entzerren eines Empfangssignals**

(57)    In vielen Telekommunikationssystemen werden Nachrichtensignale übertragen, die eine vorgegebene Musterbitfolge (training sequence) enthalten, um die Signalverarbeitung im Empfänger, insbesondere die Entzerrung zu verbessern. Dazu wird anhand der Musterbitfolge wird die Kanalimpulsantwort im Rahmen eines iterativen Verfahrens geschätzt. Bekannt ist es, die Musterbitfolge um solche Bits zu erweitern, die aus der Rekonstruktion des Sendesignals stammen.

Es wird hier nun vorgeschlagen, dass die Entzerrstufe (EQ) auf das Empfangssignal (Y) aufsynchronisiert wird, indem zumindest die zweite, mittels der erweiterten Musterbitfolge (TS*) geschätzte Kanalimpulsantwort (H2') verwendet wird. Der Empfänger (RX) enthält dazu geeignete Synchronisationsmittel (SYNC). Durch diese Maßnahmen wird erreicht, dass die Entzerrung genau angepasst wird an den zeitlichen Verlauf der Kanalimpulsantwort (H2'), so dass die Entzerrung des Empfangssignals (Y) deutlich verbessert werden kann. In Versuchen wurden Verbesserungen des Signal-Rauchverhältnisses um etwa 0,5 dB erzielt. Vorzugsweise wird für die iterative Kanalschätzung die erweiterte Musterbitfolge (TS*) bei schnellen Kanaländerungen, so wie sie in Mobilfunksystemen auftreten können, geteilt in zwei oder mehrere Teile (TS*a, TSb*).

Fig. 2a

EP 1 284 562 A1

# EP 1 284 562 A1

## Beschreibung

Die Erfindung betrifft ein Verfahren zum Entzerren eines Empfangssignals, das aus einem über einen Übertragungskanal kodiert übertragenen Sendesignal hervorgeht und das eine vorgegebene Musterbitfolge enthält, gemäß dem Oberbegriff des Anspruchs 1.

Außerdem betrifft die Erfindung einen Empfänger, der eine Entzerrstufe enthält, sowie eine damit ausgestattete Empfangsstation gemäß einem der nebengeordneten Ansprüche.

In vielen Telekommunikationssystemen werden Nachrichtensignale gesendet und empfangen, die eine vorgegebene Musterbitfolge enthalten. Es gibt sowohl drahtgebunde Telekommunikationssysteme als auch drahtlose Telekommunikationssysteme, wie etwa das Mobilfunksystem GSM (Global System for Mobil Communications), in denen solche Nachrichtensignale übertragen werden. Im Gegensatz zu dem Nutzanteil des Nachrichtensignales, der sogenannten "payload", tragen die Musterbitfolgen keine Nutzdaten, sondern Signalisierungsdaten, die der Verbesserung der Signalverarbeitung im Empfänger und auch der Identifizierung von Nachrichtenpaketen dienen. Diese Musterbitfolgen werden häufig mit "training sequence" bezeichnet. Sofern sie am Anfang oder in der Mitte des Nachrichtensignales eingebunden sind werden sie oft auch kurz mit "preamble" bzw. "midamble" bezeichnet.

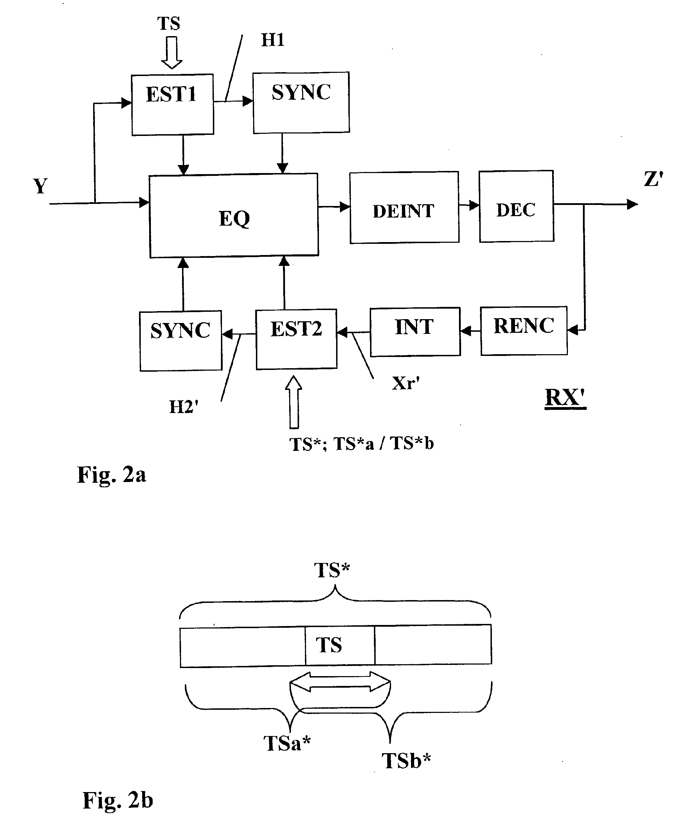

In der der veröffentlichten Patentanmeldung US 2001/0004390 A1 wird Empfänger für TDMA-Nachrichtensignale, insbesondere für TDMA-Funkssignale, beschrieben, der einen Entzerrer enthält, bei dem eine iteratives Kanalschätzung durchführt wird (siehe dort etwa Seite 1, ersten drei Absätze). Zunächst wird dazu mittels der vorgegebenen Musterbitfolge ("training sequence") werden eine erste Kanalschätzung des Übertragungskanals durchgeführt und eine erste geschätzte Kanalimpulsantwort ermittelt (siehe dort Seite 1, Abschnitt 0010 "generating an initial estimate of the impulse response of the radio channel"). Dann wird mittels der ersten geschätzten Kanalschätzung wird das Empfangssignal in einer Entzerrstufe des Empfängers entzerrt (siehe dort Seite 1, Abschnitt 0011). Weiterhin wird eine zweite Kanalschätzung gemacht (siehe dort Seite 1, Abschnitt 0015 "generating an updated estimate"), wobei sogenannte "feedback information" verwendet werden. Das Verfahren wird dort näher anhand der Fig. 2 beschrieben auf Seite 3, Abschnitte 0038 ff., insbesondere Abschnitt 0041 beschrieben. Demnach entspricht die "feedback information" einer erweiterten Musterbitfolge ("sample sequence with more known symbols"), die sowohl Bits der vorgegebene Musterbitfolge ("training sequence") enthält als auch Bits eines durch die Blöcke "206" und "207" rückgekoppelten Signals, wobei diese Bits zu den Werten des Original-Sendesignals passen (siehe Abschnitt 0040 "are compatible with the original sample vector y). Das bedeutet, dass durch die Blöcke "206" und "207" mittels des entzerrten Empfangssignals ein rekonstruiertes Sendesignal gebildet wird, um anschließend mittels einer erweiterten Musterbitfolge mindestens eine zweite Kanalschätzung ("updated channel estimate") des Übertragungskanals durchgeführt und mindestens eine zweite geschätzte Kanalimpulsantwort ermittelt werden. Dieses bekannte iterative Verfahren verbessert zwar durch Verwendung einer erweiterten Musterbitfolge direkt die Kanalschätzung, jedoch wird die Entzerrung selbst nur indirekt verbessert im Umfang der Qualität der berechneten Kanalimpulsantwort.

Aufgabe der Erfindung ist es daher ein Verfahren der eingangs genannten Art anzugeben, bei dem die Entzerrung direkt verbessert wird. Außerdem soll ein nach dem Verfahren arbeitender Empfänger sowie eine damit ausgestattete Empfangsstation vorgeschlagen werden.

Gelöst wird die Aufgabe durch ein Verfahren mit den Merkmalen des Anspruchs 1 und durch einen Empfänger sowie eine Empfangsstation mit den Merkmalen nach einem der nebengeordneten Ansprüche.

Demnach wird vorgeschlagen, dass die Entzerrstufe auf das Empfangssignal aufsynchronisiert wird, indem zumindest die zweite, mittels der erweiterten Musterbitfolge geschätzte Kanalimpulsantwort verwendet wird. Der Empfänger enthält dazu Synchronisationsmittel, die zumindest die zweite, mittels der erweiterten Musterbitfolge geschätzte Kanalimpulsantwort auswerten und damit die Entzerrstufe auf das Empfangssignal aufsynchronisieren.

Durch diese Maßnahmen wird erreicht, dass die Entzerrung genau angepasst wird an die digitale Darstellung der Kanalimpulsantwort, so dass die Entzerrung des Empfangssignals deutlich verbessert werden kann. Das bedeutet, dass die Position und Länge eines Zeitfensters bestimmt wird, die die relevanten Abgriffe (Englisch: taps) umfasst, welche die Kanalimpulsantwort darstellen. Die Entzerrung wird somit an das optimale Fenster angepasst. In Versuchen wurden Verbesserungen des Signal-Rauchverhältnisses um etwa 0,5 dB erzielt.

Besonders vorteilhafte Ausgestaltungen der Erfindung ergeben sich aus den Unteransprüchen.

Demnach ist es besonders vorteilhaft, wenn die Entzerrstufe auf das Empfangssignal aufsynchronisiert wird, indem auch die erste, mittels der vorgegebenen Musterbitfolge geschätzte Kanalimpulsantwort verwendet wird. Dadurch wird ohne besonderen Mehraufwand eine weitere Verbesserung erreicht.

Auch ist es besonders vorteilhaft, wenn im Empfänger das entzerrte Empfangssignal dekodiert wird zu einem Ausgangssignal, und wenn die zweite mittels der erweiterten Musterbitfolge durchgeführte Kanalschätzung der Kanalimpulsantwort nur dann erfolgt, falls zuvor festgestellt wird, dass das Ausgangssignal mehr als eine zulässige Anzahl an Rahmenfehlern enthält. Dadurch wird erreicht, dass die Iteration sofort abgebrochen wird, wenn das Empfangssignal ausreichend gut dekodiert werden kann.

Außerdem ist es von besonderem Vorteil, wenn der Empfänger das Empfangssignal von einer mobilen Sendestation empfängt, und wenn, bevor die erweiterte Musterbitfolge für die zweite Kanalschätzung verwendet wird, festgestellt wird, dass die mobile Sendestation sich schneller als eine zulässige Geschwindigkeit bewegt und wenn dann zunächst nur ein erster Teil der erweiterten Musterbitfolge zur Kanalschätzung verwendet wird. Durch diese besonderen Maßnahmen, die für Mobilfunkverbindungen angewendet werden, ist es möglich auch bei schnellen Änderungen des Bewegungsprofils und entsprechend schnellen Änderungen der Funkausbreitungsbedingungen, ausreichend gut und schnell zu entzerren. Dasselbe gilt gleichermaßen auch für den Fall, dass der Empfänger selbst in eine mobile Empfangsstation integriert ist. In diesem Zusammenhang ist es vorteilhaft, wenn anschließend ein zweiter Teil der erweiterten Musterbitfolge zur Kanalschätzung verwendet wird, wobei beide Teile verschiedene Bits, aber auch gemeinsame Bits enthalten. Damit wird eine Aufteilung der Musterbitfolge in mindestens zwei kleinere Abschnitte erreicht, die sich stellenweise überlappen. Das ist dann besonders nützlich, wenn die gemeinsamen Bits aus Bits der vorgegeben Musterbitfolge bestehe, wodurch sichergestellt wird, das jeder Abschnitt zumindest einige Testbits der vorgegebenen Musterbitfolge, d.h. der Trainingssequenz, enthalten.

Es ist außerdem besonders vorteilhaft, wenn das Empfangssignal von dem Empfänger über mindestens zwei zueinander beabstandete Antennen in der Form von Diversity-Antennen oder Gruppenantennen (Englisch: antenna array) als Antennensignale über entsprechend viele Antennenpfade empfangen wird, und dass mittels einer Auswertung der geschätzten Kanalimpulsantwort diese Antennensignale zu einem Empfangssignal kombiniert werden, wobei diese Kombination (z.B. durch das sog. "maximum ratio combining" oder "equal weight combining") iterativ wiederholt wird jeweils mittels der zuletzt geschätzten Kanalimpulsantwort. Dadurch werden iterative Entzerrung und Diversity-Empfang bzw. Antennenarray-Empfang miteinander kombiniert, wodurch ein besonders großer Qualitätsgewinn erzielt wird. Die Erfindung ist für alle denkbaren Übertragungsverfahren einsetzbar, insbesondere für TDMA- oder CDMA-Übertragungsverfahren.

Für den Fall von CDMA-Übertragungsverfahren, bei denen ein Rake-Empfänger verwendet wird, ist es besonders vorteilhaft, wenn zunächst die erste Kanalschätzung und eine zeitliche Diversity-Kombination der Rake-Finger durchgeführt wird, und dass dann eine räumliche Diversity-Kombination über alle Antennenpfade durchgeführt wird, um anschließend das gewonnene Signal dekodieren zu können. Gleiches gilt für die umgekehrte Reihenfolge, bei der zunächst die erste Kanalschätzung und eine räumliche Diversity-Kombination über alle Antennenpfade durchgeführt wird, und dass dann eine zeitliche Diversity-Kombination der Rake-Finger durchgeführt wird. In diesem Zusammenhang ist es besonders vorteilhaft, wenn das dekodierte Signal wieder kodiert wird, wenn damit die zweite Kanalschätzung durchgeführt wird, wenn dann erneut die räumliche und zeitliche Diversity-Kombination durchgeführt werden und wenn anschließend das erneut gewonnene Signal dekodiert wird.

Die Erfindung und die sich daraus ergebenden Vorteile werden nun näher beschrieben anhand von zwei Ausführungsbeispielen, wobei auf die folgenden Zeichnungen, die schematische Darstellungen wiedergeben, Bezug genommen wird:

Fig. 1a zeigt den Grundaufbau eines Nachrichtenübertragungssystems;
Fig. 1b zeigt den Aufbau eines bekannten Empfängers;
Fig. 1c zeigt die bekannte Struktur einer erweiterten Musterbitfolge;
Fig. 2a zeigt den Aufbau eines erfindungsgemäßen Empfängers;
Fig. 2b zeigt eine erfindungsgemäße erweiterte Musterbitfolge;
Fig. 3 zeigt das Flussdiagramm für ein erfindungsgemäßes Verfahren, und
Fig. 4 zeigt den Aufbau eines erfindungsgemäßen Rake-Empfängers.

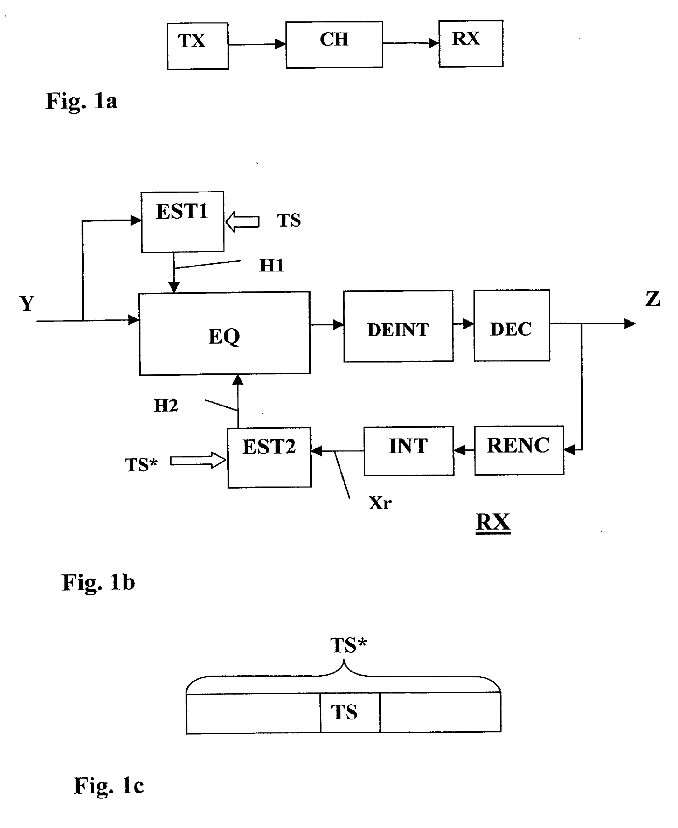

In der Figur 1a ist schematisch der Aufbau eines herkömmlichen Nachrichtenübertragungssystems dargestellt. Im wesentlichen besteht das System aus einem Sender TX, einem Empfänger RX und einem zur Nachrichtenübertragung vorgesehenen Übertragungskanal CH. Diese Prinzipskizze gilt gleichermaßen für drahtgebundene wie für drahtlose System. Der Nachrichtenübertragungskanal CH kann also durch eine Leitungsverbindung, etwa durch Kabel oder optische Lichtwellenleiter, geschaffen werden oder durch eine Funkverbindung, etwa durch eine Mobilfunkverbindung. Nachfolgend wird besonders auf Mobilfunksysteme Bezug genommen. Auch hinsichtlich der Art der Nachrichtenübertragung können verschiedenste Nachrichtenübertragungsverfahren verwendet werden, so etwa TDMA-oder CDMA-Übertragungsverfahren. Hinsichtlich von TDMA-Verfahren sind hier besonders Übertragungsmodi zu nennen, die aus dem GSM (Global System for Mobile Communications) bekannt sind, wie GPRS (General Packet Radio Service) oder EDGE (Evolved Data for GSM Evolution).

Die Figur 1b zeigt einen herkömmlichen Empfänger RX, der ein über den Nachrichtenübertragungskanal übertragenes Empfangssignal Y empfängt, um es anschließend zu entzerren und weiter zu verarbeiten, insbesondere zu dekodieren. Der Empfänger RX hat eine Entzerrstufe EQ, an deren Eingang das Empfangssignal Y anliegt. Der Ausgang der Entzerrstufe EQ ist mit Signalverarbeitungsmitteln DINT und DEC verbunden, die das entzerrte Signal zunächst entschachteln (Englisch: Deinterleaving) und es anschließend dekodieren. Wir gehen in diesem Fall von einem Empfangssignal aus, das gemäß im Rahmen einer TDMA-Funkübertragung kodiert und verschachtelt übertragen wird. Durch die auf der Empfangsseite durchgeführte Entzerrung, die anschließende Entschachtelung und Dekodierung erhält man am Ausgang des Empfängers ein Ausgangssignal Z, das den Nachrichteninhalt des Empfangssignals wiedergibt. Zur Steuerung der Entzerrstufe EQ verfügt der Empfänger RX zudem über Signalanalysemittel EST1 und EST2, die im wesentlichen eine Kanalschätzung durchführen und zwar im Rahmen eines iterativen Verfahrens, so wie es in der eingangs genannten Patentanmeldung US 2001/0004390 A1 beschrieben wird. Dabei wird zunächst eine erste Kanalschätzung EST1 durchgeführt anhand einer vorgegebenen Musterbitfolge (Trainingssequenz TS). Daraus erhält man eine erste geschätzte Kanalimpulsantwort H1, mit der die Entzerrerstufe EQ optimiert eingestellt werden kann. In einem zweiten Durchlauf wird anhand einer zweiten Kanalschätzung EST2 eine zweite geschätzte Kanalimpulsantwort H2 ermittelt, um die Entzerrstufe EQ weiterhin zu optimieren. Dazu ist es bekannt, aus dem Ausgangssignal Z ein rekonstruiertes Sendesignal Xr zu bilden durch eine Kodierung RENC und anschließende Verschachtelung INT. Auf der Grundlage dieses rekonstruierten Sendesignales Xr wird eine erweiterte Musterbitfolge TS* gebildet, die dann für die zweite Kanalschätzung EST2 herangezogen wird, um schließlich die zweite geschätzte Kanalimpulsantwort H2 zu erhalten.

In der Figur 1c ist eine solche erweiterte Musterbitfolge T* dargestellt. Bekannt ist es, dass diese erweiterte Musterbitfolge T* gebildet wird, indem sowohl die Bits der vorgegebenen Musterbitfolge (Trainingssequenz TS) verwendet werden wie auch noch die Bits des rekonstruierten Sendessignales Xr. Durch diese Maßnahme wird die zweite Kanalschätzung ST2 (siehe Figur 1 b) auf eine größere Datenbasis gestellt, was dazu führt, dass eine bessere geschätzte zweite Kanalimpulsantwort H2 ermittelt werden kann.

Das anhand der Figuren 1a, 1b und 1c beschriebene bekannte Verfahren und der danach arbeitende Empfänger erzielen zwar eine verbesserte Kanalschätzung, jedoch verbessert sich die Entzerrung selbst nur indirekt und zwar im Umfange der Qualität der berechneten zweiten Kanalimpulsantwort.

Die nachfolgend beschriebenen Figuren zeigen Ausführungsformen der Erfindung, mit deutlich verbesserten Empfängern und dem Ablaufdiagramm des verbesserten Verfahrens:

In der Figur 2a ist schematisch der Aufbau eines erfindungsgemäßen Empfängers RX' dargestellt, der geeignet ist TDMA-Signale, insbesondere im GPRS-Modus oder EDGE-Modus, zu empfangen. Im Vergleich zu dem herkömmlich aufgebauten Empfänger nach Figur 1b hat der in Figur 2a dargestellte Empfänger über die bereits genannten Elemente, wie Entzerrstufe EQ, Deinterleaver DEINT, Dekodierer DEC, Kodierer RENC, Interleaver INT und Signalanalysemittel EST1 und EST2, noch zusätzlich Synchronisationsmittel SYNC zur weiteren Optimierung der Entzerrstufe EQ. Diese Synchronisationsmittel SYNC erhalten aus der Kanalschätzung umfangreiche Informationen über die geschätzte Kanalimpulsantwort. Bei diesen Informationen handelt es sich um Parameter, um sogenannte Abgriffe (Englisch: taps), die sowohl den Betrag sowie auch die zeitliche Lage der Kanalimpulsantwort wieder geben. Die Abgriffe (taps) geben somit alle Informationen an, die benötigt werden, um den Kanal vollständig zu beschreiben und um somit eine genaue (Fein-) Synchronisation auf das Empfangssignal hin in der Entzerrstufe EQ durchzuführen. Eine Grobsynchronisation des Empfangssignales Y erfolgt bereits in einer der Entzerrstufe EQ vorgeschalteten (nicht dargestellten) Stufe.

Die hier vorgeschlagene (Fein-) Synchronisation der Entzerrstufe EQ wird vorzugsweise im Zusammenhang mit jeder Kanalschätzung, d.h. mit der ersten als auch mit der zweiten und ggfs. mit jeder weiteren Kanalschätzungen durchgeführt. Zumindest aber sollte die Synchronisierung im Zusammenhang mit der zweiten Kanalschätzung EST2 erfolgen. Es werden im Vergleich zum Stand der Technik Verbesserungen im Signal-Rausch-Verhältnis erzielt, die etwa 0,5 dB betragen. Auch wird die Rahmenfehlerrate reduziert. Durch die vorgeschlagene Synchronisierung nimmt die Entzerrstufe EQ die richtigen von der Kanalschätzung ermittelten Abgriffe (taps). Dies kann mit den herkömmlichen Verfahren und Systemen nicht erreicht werden.

Darüber hinaus wird hier vorgeschlagen, dass bei sich schnell ändernden Übertragungseigenschaften, wie sie beispielsweise in einem Mobilfunksystem auf einem Mobilfunkkanal auftreten, nur ein Teil der erweiterten Musterbitfolge für die iterative Kanalschätzung genommen wird.

Anhand der Figur 2b ist beispielhaft eine solche erweiterte Musterbitfolge TS* dargestellt, die die Bits der vorgegebenen Musterbitfolge TS sowie weitere Bits, die vorzugsweise aus dem rekonstruierten Sendesignal (siehe Xr' in Fig. 2a) abgeleitet sind, umfasst. In Abhängigkeit von den Änderungen auf dem Übertragungskanal, beispielsweise durch einen sich schnell bewegenden Sender (Mobilstation) wird hier nicht die ganze erweiterte Musterbitfolge TS* auf einmal für eine Kanalschätzung verwendet wird, sondern es werden abschnittsweise, einzelne Teile dieser Musterbitfolge TS* verwendet. Ist zum Beispiel die Geschwindigkeit des Senders in einem Bereich größer 150 Stundenkilometer, so wird die Musterbitfolge TS* aufgeteilt in zwei Teile, nämlich in einen ersten Teil TSa* und in einen zweiten Teil TSb*. Beide Teile überlappen sich und umfassen zumindest einige gemeinsame Bits, die vorzugsweise aus der vorgebbaren Musterbitfolge TS stammen. In dem in Figur 2b dargestellten Beispiel überlappen die beiden Teile TSa* und TSb* sich genau soweit, dass sie beide exakt die Bits der vorgegebenen Musterbitfolge TS enthalten. Es ist denkbar, dass die beiden Teile TSa* und TSb* sich mehr oder auch weniger stark überlappen. Dadurch dass jedes Teil zumindest auch Bits der vorgegebenen Musterbitfolge TS enthält, kann eine Kanalschätzung hinreichend sicher durchgeführt werden.

In einem ersten Teilschritt wird zunächst die zweite Kanalschätzung nur anhand des ersten Teils TSa* durchgeführt und später in einem nachfolgenden Teilschritt nochmals anhand de s zweiten Teils TSb* durchgeführt. Insgesamt wird also somit die erweiterte Musterbitfolge TS* in zwei oder auch mehrere Teilbereiche aufgeteilt.

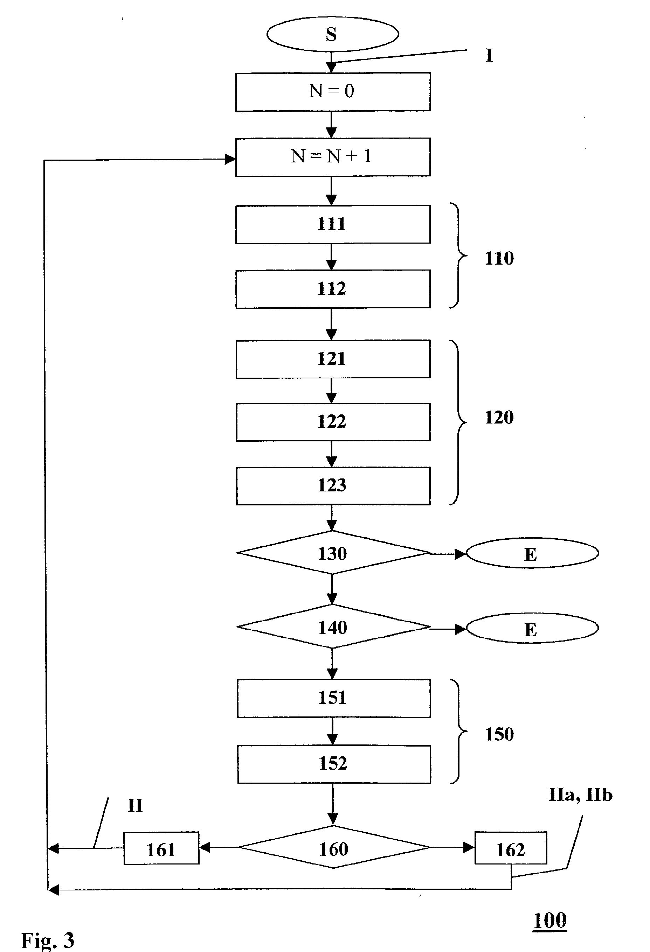

Die Figur 3 zeigt ein Ablaufdiagramm für das erfindungsgemäße Verfahren mit der verbesserten iterativen Kanalschätzung. Das Verfahren 100 umfasst die Schritte 111 bis 162 und läuft wie folgt ab:

Zunächst wird nach dem Start des Verfahrens im Schritt S ein Schleifenzähler auf einen Anfangswert N=0 gesetzt. Es folgt dann der erste Durchlauf I (erste Iterartion), wobei zunächst der Schleifenzähler um eins erhöht wird (N=N+1). Im nächsten Schritt 111 wird die erste Kanalschätzung durchgeführt und anschließend eine Synchronisation 112 der Entzerrstufe auf das Empfangssignal durchgeführt (siehe auch EST1 und SYNC in Fig. 2a). Die beiden Teilschritte 111 und 112 bilden einen Maßnahmenkomplex 110, der der Vorbereitung und Steuerung der Entzerrung dient.

Im nächsten Schritt 121 folgt die Entzerrung des Empfangssignales, danach die Entschachtelung (Deinterleaving) im Schritt 122 und anschließend die Dekodierung des Empfangssignals im Schritt 123. Die Teilschritte 121 bis 123 bilden einen Maßnahmenkomplex 120, der unmittelbar die Entzerrung und weitere Signalverarbeitung des Empfangssignals bewirkt. Damit steht nun ein Ausgangssignal am Ende der Dekodierstufe zur Verfügung (siehe Z' in der Figur 2a).

In einem Schritt 130 wird dann geprüft, ob das Ausgangssignal Rahmenfehler enthält. Beispielsweise geschieht diese Prüfung mittels eines sogenannten CRC-Checks. Liegen keine Fehler vor, so wird mit dem Schritt 140 weiterverfahren. Andernfalls, d.h. bei einem Fehler, wird das Verfahren beendet mit dem Schritt E.

Sofern das Empfangssignal fehlerfrei dekodiert werden konnte, folgt jedoch der Schritt 140, in dem geprüft wird, ob der Schleifenzähler N eine vorgebbare maximale Anzahl bereits erreicht hat. Mit dieser Abfrage wird sichergestellt, dass das Verfahren 100 nur eine maximale Anzahl von Iterationen durchführt. Gegebenenfalls wird dann das Verfahren beendet im Schritt E. Wie oben beschrieben wurde, ist hier der Schleifenzähler N gleich 1, d.h. wir befinden uns noch in der ersten Iteration und es wurde lediglich die erste Kanalschätzung durchgeführt (siehe Schritt 111).

Somit geht das Verfahren weiter mit dem Schritt 151, wo die Weiterbearbeitung des Ausgangssignaldaten innerhalb einer rückgekoppelten Schleife (siehe die Blöcke RENC, INT, EST2 und SYNC in der Fig. 2b) durchgeführt werden. Bei dem Schritt 151 handelt es sich um die Rückkodierung (Englisch: Reencoding) der Daten. Im nachfolgenden Schritt 152 folgt die Verschachtelung (Interleaving) der kodierten Daten. Mit diesen beiden Teilschritten 151 und 152 erfolgt also eine Datenrekonstruktion 150, aus der das rekonstruierte Sendesignal (siehe Xr' in der Fig. 2a) hervorgeht. Dieses rekonstruierte Sendesignal wird dann in der nächsten Iteration bei der weiteren Kanalschätzung verwendet.

Zunächst aber folgt im Schritt 160 eine Abfrage, ob die mobile Sendestation, die das Sendesignal aussendet (Es kann auch die mobile Empfangstation selbst sein, die das Signal empfängt.) eine vorgebbare Geschwindigkeit von z.B. 150 km/h überschreitet. Liegt die Geschwindigkeit der mobilen Station darunter, so wird mit dem Schritt 161 weiterverfahren, wo eine einfache erweiterte Musterbitfolge TS* verwendet wird. Liegt jedoch die Geschwindigkeit über diesem Schwellwert, so wird im Schritt 162 die erweiterte Musterbitfolge aufgeteilt in mindestens zwei Teile TS*a und TS*b (vergleiche Figur 2b). Diese beiden Teile dienen jeweils als Teil-Musterbitfolgen für die nächsten Iterationsschritte. Nur in dem Fall, dass die Geschwindigkeit kleiner als der Schwellwert ist, wird die ganze Musterbitfolge TS* genommen (Schritt 161). Es wird auch geprüft, ob aufgrund der sich bewegenden Station während eines Zeitschlitzes eine deutliche Verschlechterung der Kanalübertragungseigenschaften aufgrund von Funkschwund (sogenanntes "small scale fading") auftritt. Sofern die Verschlechterung zu einer Rahmenfehlerrate (Englisch: Frame Error Rate) führt, die größer ist als ein zulässiger Maximalwert, erfolgt eine weitere Iteration der Kanalschätzung mit der erweiterten Musterbitfolge, die ggfs. geteilt wird in kleinere Teileinheiten. Als Rahmenfehlerrate wird hier die Anzahl der auftretenden Fehler innerhalb eines Datenblocks oder -rahmens (Englisch: frame) verstanden, der wiederum der durch Anzahl von Bits und Zeichen definierten Transporteinheit entspricht.

Für die weitere Iteration geht in beiden Fällen, d.h. mit der ganzen oder mit der geteilten Musterbitfolge, das Verfahren wieder zurück zum Anfang, wobei zunächst der Zähler N um eins erhöht wird. Danach erfolgt dann eine weitere Kanalschätzung 111 entweder auf der Grundlage der erweiterten Musterbitfolgen TS* oder auf der Grundlage der Teil-Musterbitfolgen TS*a oder TS*b. Daran schließen sich dann wiederum eine Synchronisation an und die nachfolgenden Schritte 121 bis 123, so dass am Ende des Schrittes 123 ein verbessertes Ausgangssignal vorliegt. Es können weitere Iterationen folgen solange, bis das Abbruchkriterium im Schritt 140 erfüllt ist oder bis die Dekodierung hinreichend gut ist, was im Schritt 130 geprüft wird.

Das vorgeschlagene Verfahren 100 ist also ein deutlich verbessertes iteratives Verfahren zur Entzerrung von Empfangssignalen, wobei besonders beachtet wird, dass sich der Nachrichtenübertragungskanal auf Grund von Bewegungen des Senders oder anderen Einflüssen, sehr schnell ändern kann.

Dieses Verfahren kann also besonders vorteilhaft eingesetzt werden in Mobilfunksystemen und zwar für die verschiedensten Übertragungstechniken. So ist es denkbar, die Erfindung sowohl für TDMAals auch für CDMA -Mobilfunksysteme einzusetzen. Im Fall von TDMA-Systemen wird eine erfindungsgemäße Entzerrstufe, so wie z.B. anhand der Fig. 2a beschrieben, in den Empfänger integriert. Im Fall von CDMA-Systemen wird die Erfindung innerhalb eine Rake-Empfängers realisiert; der Rake-Empfänger tritt sozusagen an die Stelle der Entzerrstufe. In diesem Sinn ist auch der Begriff "Entzerrstufe" so weit gefasst zu verstehen, dass auch Rake-Empfänger umfasst. Da es sich es sich bei beiden Elementen um Demodulationselemente handelt, könnte man auch den Begriff "Demodulationsstufe" als übergeordneten Begriff verwenden. Rake-Empfänger sind an sich bekannt. Sie führen eine zeitliche Kombination von Signalanteilen, den sogenannten Rake-Fingern, durch.

Zudem kann das Verfahren vorteilhaft eingesetzt werden in beliebigen Empfängern, die über Vielfach-Antennen die Funksignale empfangen. Es handelt sich dabei insbesondere um Diversity-Antennen mit mindestens zwei räumlich zueinander beabstandete Antennen oder um Gruppenantennen mit mehreren äquidistant angeordneten Antennenelementen. Dadurch werden über verschiedene Antennenpfade entsprechend viele Antennesignale empfangen, die der Empfänger zu einem Empfangssignal kombiniert. Im Fall von Diversity-Antennen kommen dafür Algorithmen zum Einsatz, wie etwa das sogenannte "maximum ratio combining". Im Fall von Gruppenantennen werden sogenannte "beamforming"- Algorithmen verwendet. Je nach Art der Funkübertragung werden die Kombinations-Algorithmen in den Komponenten des Empfängers implementiert. Erfindungsgemäß wird nun auch das vorgeschlagene iterative Kanalschätzungsverfahren mit dem jeweiligen Kombinations-Algorithmus verknüpft.

Im folgenden wird ein Beispiel für ein CDMA-Mobilfunksystem beschrieben, wobei eine Anordnung von Rake-Empfängern verwendet wird, die mit einer Anzahl von m (m>1) Antennenelementen einer Gruppenantenne verbunden sind. Es handelt sich also um einen m-dimensionalen Rake-Empfänger:

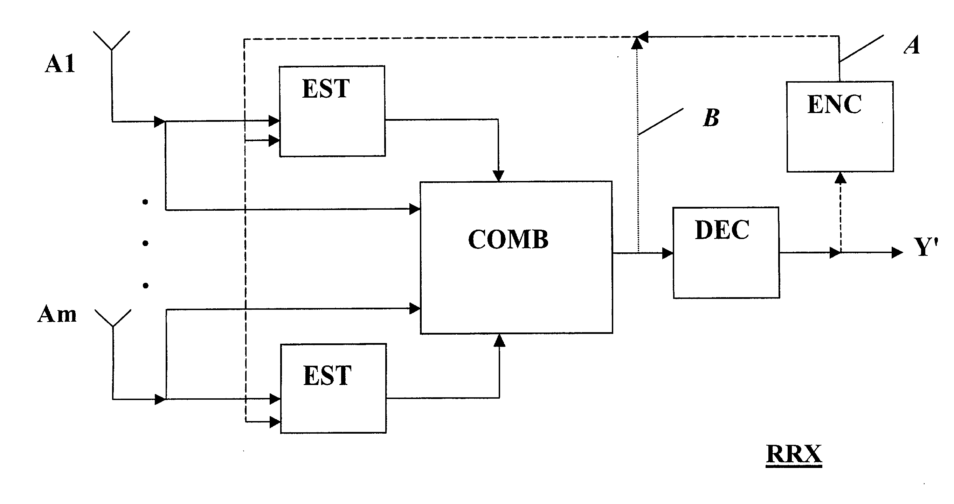

Die Figur 4 stellt einen m-dimensionalen Rake-Empfänger RRX dar, der zum einen für jeden Antennenpfad zeitlich die Signalanteile über die Rake-Finger kombiniert und außerdem über die verschiedenen m Antennenpfade die eine räumliche Kombination durchführt nach dem sogenannten Antenna-Diversity-Prinzip. Dabei werden von mindestens zwei zueinander beabstandeten Antennen, die hier die Form einer Gruppenantenne mit mehreren Antennenelementen A1 bis Am annehmen, die Antennensignale zu dem Empfänger geführt und dort miteinander kombiniert zu einem einheitlichen Empfangssignal Y'. Bei der räumlichen Kombination werden die einzelnen Antennensignale gewichtet und aufsummiert. Geeignete Kombinationsalgorithmen sind an sich bekannt, so z.B. das sogenannte ""equal weight combining". Auch können sogenannte "beamforming"-Algorithm verwendet werden. Beide Kombinationen, sowohl die zeitliche als auch die räumliche Kombination, werden in der Stufe COMB, die im wesentlichen einer m-dimensionale Rake-Kombinationsstufe entspricht. Die Funktion dieser Stufe wird nachfolgend noch genau beschrieben.

Durch die in der Fig. 4 dargestellten Funktionsblöcke soll verdeutlicht werden, dass erfindungsgemäß auch die vorgeschlagene iterative Kanalschätzung zur Verbesserung der zeitlichen-Kombination in Rake-Empfängern als auch der räumlichen Kombination nach dem Antenna-Diversity-Prinzip eingesetzt werden kann. Dazu wird auf jeden Antennenpfad eine Kanalschätzung angewendet, die gemäß dem zuvor beschriebenen iterativen Verfahren (siehe Fig. 3) durchgeführt wird. Die Antennensignale gehen von den Antennen aus sowohl direkt zu der Kombinationstufe COMB als auch zu den Kanalschätzern EST. Diese liefern geschätzte Kanalimpulsantworten, die als Parameter für die zeitliche und räumliche Kombination in der Stufe COMB verwendet werden. Die Rückkopplungsschleife A oder B stellt dabei das iterativ durchgeführte Verfahren dar. In jedem Durchlauf werden dabei die von dem (nicht dargestellten und im Rake-Empfänger integrierten) Pfadprofilierer (Englisch: path profiler) ausgewählten relevanten Pfade zugrunde gelegt. Unter Zuhilfenahme der jeweils zuletzt geschätzten Kanalimpulsantwort kann mittels eines geeigneten Algorithmus einer der vom Path Profiler empfohlenen Pfade ausgewählt werden. Die Rückkopplung A zeigt, dass dazu das in der Dekodierstufe dekodierte Signal wieder zurückkodiert wird. Die Rückkopplungsschleife B zeigt, dass direkt das Ausgangssignal verwendet wird. Das erste Verfahren (Schleife A) hat den Vorteil, dass die durch Dekodierung des Signals gewonnene Signalqualität genutzt wird. Das zweite Verfahren (Schleife B) ist dagegen schneller und benötigt weniger Prozessorleistung sowie weniger Speicherkapazität.

In dem in der Fig. 4 gezeigten Beispiel handelt es sich um einen Rake-Empfänger, der CDMA-Funksignale empfängt. Somit werden innerhalb der Kombination COMB sowohl zeitliche als auch räumliche Kombinationen durchgeführt, nämlich zeitliche Kombinationen (Englisch: Temporal Diversity Combining) über die Rake-Finger der einzelnen Empfangssignale sowie auch räumliche Kombinationen (Spatial Diversity Combining) über die verschiedenen Antennenpfade. Unabhängig von der Reihenfolge wie man kombiniert, führt das Ergebnis letztlich zu einer doppelten Summenbildung aller auf den verschiedenen Antennenpfaden empfangenen Signalanteilen. Die Doppelsumme kann durch die folgende Formel beschrieben werden:

$$\sum_{m=1}^{M}\sum_{l=1}^{L} w_{m,l}^{*} r_m(t - \tau_l)$$

Dabei bedeutet r das m-te Antennensignal und w* die Wichtung für den I-ten Rake-Finger des m-ten Antennensignals. Die Wichtung ist dabei eine Funktion der Kanalschätzung.

Es wird also eine Doppelsumme gebildet über alle räumlichen Signalanteile (Antennepfade m=1 bis M) und über alle zeitlichen Signalanteile (Rake-Finger I=1 bis L) und zwar zu jedem Abgriff (t-τ).

Anhand des Beispiels nach der Fig. 4 wird hier vorgeschlagen, die iterative Kanalschätzung für die Diversity-Kombination in einem CDMA-Empfänger einzusetzen, wobei die Kanalschätzung sowohl die zeitliche als auch die räumliche Kombination optimiert.

Dasselbe Prinzip lässt sich auch bei einem TDMA-Empfänger verwirklichen, der über mindestens zwei Diversity-Antennen verfügt, in dem die Kanalschätzung zum einen die Entzerrung zeitlich optimiert durch Fein-Synchronisation und zum anderen die räumliche Diversity-Kombination (z.B. maximum ratio combining) optimiert.

Wie anhand der Figuren 2a bis 2c beschrieben kommt die Erfindung auch bei Empfängern zum Einsatz, die ohne Empfangs-Diversity (in Form von Antenna-Diversity und/oder Rake-Empfang) arbeiten. Unabhängig davon, ob auf der Empfangsseite Diversity verwendet wird oder nicht, ergibt die vorgeschlagene verbesserte Kanalschätzung und Entzerrung bereits deutliche Vorteile, so wie sie oben beschrieben wurden, insbesondere einen Gewinn von etwa 0,5 dB in Bezug auf das Signal-Rausch-Verhältnis. Eine weitere Steigerung ergibt sich in Systemen, in denen auch ein Sende-Diversity angewendet wird. Das bedeutet, dass sendeseitig bereits über verschiedene Antennenpfade Sendesignale ausgesendet werden und als verschiedene Empfangssignalanteile am Empfänger eintreffen.

Die beschriebenen Beispiele nehmen besonders Bezug auf den Einsatz der Erfindung im Bereich von Mobilfunksystemen, insbesondere in TDMA - Systemen, wie beispielsweise GSM mit GPRS- oder EDGE-Modus, sowie in CDMA-Mobilfunksystemen, wie beispielsweise dem UMTS (Universal Mobile Telecommunications System). Daneben gibt es zahlreiche andere Beispiele für den Einsatz der Erfindung, nicht nur im Bereich der drahtlosen, sondern auch im Bereich der drahtgebundenen Übertragungstechnik.

**Patentansprüche**

1. Verfahren (100) zum Entzerren eines Empfangssignals (Y), das aus einem über einen Übertragungskanal (CH) kodiert übertragenen Sendesignal (X) hervorgeht und das eine vorgegebene Musterbitfolge (TS) enthält, mit folgenden Schritten:

   - mittels der vorgegebene Musterbitfolge (TS) werden eine erste Kanalschätzung des Übertragungskanals (CH) durchgeführt und eine erste geschätzte Kanalimpulsantwort (H1) ermittelt (Schritt 111, I);
   - mittels der ersten geschätzten Kanalschätzung (H1) wird das Empfangssignal (Y) in einer Entzerrstufe (EQ) des Empfängers (RX) entzerrt (Schritt 121);
   - mittels des entzerrten Empfangssignals wird ein rekonstruiertes Sendesignal (Xr) gebildet (Schritte 151 und 152);
   - anschließend werden mittels einer erweiterten Musterbitfolge (TS*), die sowohl Bits der vorgegebene Musterbitfolge (TS) als auch Bits des rekonstruierten Sendesignals (Xr) enthält, mindestens eine zweite Kanalschätzung des Übertragungskanals (CH) durchgeführt und mindestens eine zweite geschätzte Kanalimpulsantwort (H2) ermittelt (Schritt 111, II);

   **dadurch gekennzeichnet, dass**
   die Entzerrstufe (EQ) auf das Empfangssignal (Y) aufsynchronisiert wird (Schritt 112, II), indem zumindest die zweite, mittels der erweiterten Musterbitfolge (TS*) geschätzte Kanalimpulsantwort (H2) verwendet wird.

2. Verfahren (100) nach Anspruch 1, **dadurch gekennzeichnet, dass** die Entzerrstufe (EQ) auf das Empfangssignal (Y) aufsynchronisiert wird (Schritt 112, II), indem auch die erste, mittels der vorgegebenen Musterbitfolge (TS) geschätzte Kanalimpulsantwort (H1) verwendet wird.

3. Verfahren (100) nach Anspruch 1, **dadurch gekennzeichnet, dass** im Empfänger (RX') das entzerrte Empfangssignal dekodiert wird (Schritt 123) zu einem Ausgangssignal (Z'), und dass die zweite mittels der erweiterten Musterbitfolge (TS*) durchgeführte Kanalschätzung (Schritt 111, II) der Kanalimpulsantwort (H2) nur dann erfolgt, wenn zuvor festgestellt wird (Schritt 130), dass das Ausgangssignal (Z') mehr als eine zulässige Anzahl an Rahmenfehlern enthält.

4. Verfahren (100) nach Anspruch 1, **dadurch gekennzeichnet, dass** der Empfänger (RX') das Empfangssignal (Y) von einer mobilen Sendestation (TX) empfängt und dass, bevor die erweiterte Musterbitfolge (TS*) für die zweite Kanalschätzung (Schritt 111, II) verwendet wird, festgestellt wird (Schritte 160), dass die mobile Sendestation (TX) sich schneller als eine zulässige Geschwindigkeit bewegt und dass dann zunächst nur ein erster Teil (TS*a) der erweiterten Musterbitfolge (TS*) zur Kanalschätzung verwendet wird (Schritt 162, IIa).

**5.** Verfahren nach Anspruch 1, **dadurch gekennzeichnet, dass** der Empfänger in eine mobile Empfangsstation integriert ist und dass, bevor die erweiterte Musterbitfolge für die zweite Kanalschätzung verwendet wird, festgestellt wird, dass die mobile Empfangsstation sich schneller als eine zulässige Geschwindigkeit bewegt und dass dann zunächst nur ein erster Teil der erweiterten Musterbitfolge zur Kanalschätzung verwendet wird.

**6.** Verfahren (100) nach Anspruch 4 oder 5, **dadurch gekennzeichnet, dass** anschließend ein zweiter Teil (TS*b) der erweiterten Musterbitfolge (TS*) zur Kanalschätzung verwendet wird (Schritt 162, IIb), wobei beide Teile (TS*a, TS*b) verschiedene Bits, aber auch gemeinsame Bits enthalten.

**7.** Verfahren (100) nach Anspruch 6, **dadurch gekennzeichnet, dass** die gemeinsamen Bits aus Bits der vorgegeben Musterbitfolge (TS) bestehen.

**8.** Verfahren nach Anspruch 1, **dadurch gekennzeichnet, dass** das Empfangssignal von dem Empfänger über Vielfach-Antennen in Form von Antennensignalen über entsprechend viele Antennenpfade empfangen wird, insbesondere über mindestens zwei zueinander beabstandete Antennen, die als Diversity-Antennen oder Gruppenantennen ausgebildet sind, dass mittels einer Auswertung der geschätzten Kanalimpulsantwort diese Antennensignale durch eine gewichtete Kombination zu einem Empfangssignal kombiniert werden, insbesondere durch eine Diversity-Kombination oder durch eine phasenrichtige Kombination, wobei die Phaseninformation aus den Kanalschätzungen gewonnen wird, und dass die Kombination iterativ wiederholt wird jeweils mittels der zuletzt geschätzten Kanalimpulsantwort.

**9.** Verfahren nach Anspruch 8, **dadurch gekennzeichnet, dass** die Entzerrstufe eine Rake-Empfangsstufe ist, dass das Aufsynchronisieren auf das Empfangssignal durch eine Anpassung der Pfadprofile an die Änderungen des Übertragungskanals erfolgt, dass zunächst die erste Kanalschätzung und eine zeitliche Diversity-Kombination der Rake-Finger durchgeführt wird, und dass dann eine räumliche Diversity-Kombination über alle Antennenpfade durchgeführt wird.

**10.** Verfahren nach Anspruch 9, **dadurch gekennzeichnet, dass** mittels der erweiterten Musterbitfolge (TS*) die zweite Kanalschätzung durchgeführt wird, dass dann eine erneute zeitliche Diversity-Kombination der Rake-Finger durchgeführt wird, und dass dann eine erneute räumliche Diversity-Kombination über alle Antennenpfade durchgeführt wird.

**11.** Verfahren nach Anspruch 8, **dadurch gekennzeichnet, dass** die Entzerrstufe eine Rake-Empfangsstufe ist, dass das Aufsynchronisieren auf das Empfangssignal durch eine Anpassung der Pfadprofile an die Änderungen des Übertragungskanals erfolgt, dass zunächst die erste Kanalschätzung und eine räumliche Diversity-Kombination über alle Antennenpfade durchgeführt wird, und dass dann eine zeitliche Diversity-Kombination der Rake-Finger durchgeführt wird.

**12.** Verfahren nach Anspruch 11, **dadurch gekennzeichnet, dass** mittels der erweiterten Musterbitfolge (TS*) die zweite Kanalschätzung durchgeführt wird, dass dann eine erneute räumliche Diversity-Kombination über alle Antennenpfade durchgeführt wird, und dass dann eine erneute zeitliche Diversity-Kombination der Rake-Finger durchgeführt wird.

**13.** Empfänger (RX) zum Empfang eines Empfangssignales (Y), das aus einem über einen Übertragungskanal (CH) kodiert übertragenen Sendesignal (X) hervorgeht und das eine vorgegebene Musterbitfolge (TS) enthält, mit Signalanalysemitteln (EST1, EST2), die mittels der vorgegebenen Musterbitfolge (TS) eine erste Kanalschätzung des Übertragungskanals (CH) ausführen und die eine erste geschätzte Kanalimpulsantwort (H1) ermittelt; mit einer Entzerrstufe (EQ), die das Empfangssignals (Y) mittels der ersten geschätzten Kanalschätzung (H1) entzerrt; mit Signalrekonstruktionsmitteln (RENC, INT), die mittels des entzerrten Empfangssignals ein rekonstruiertes Sendesignal (Xr) bilden; und mit Rechenmitteln, die eine erweiterte Musterbitfolge (TS*), die sowohl Bits der vorgegebene Musterbitfolge (TS) als auch Bits des rekonstruierten Sendesignals (Xr) erzeugen, wobei die Signalanalysemittel (EST2) mittels dieser erweiterten Musterbitfolge (TS*) mindestens eine zweite Kanalschätzung des Übertragungskanals (CH) ausführen und mindestens eine zweite geschätzte Kanalimpulsantwort (H2) ermitteln;
**dadurch gekennzeichnet, dass**
der Empfänger (RX) Synchronisationsmittel (SYNC) enthält, die zumindest die zweite, mittels der erweiterten Musterbitfolge (TS*) geschätzte Kanalimpulsantwort (H2) auswerten und damit die Entzerrstufe (EQ) auf das Empfangssignal (Y) aufsynchronisieren.

14. Empfangsstation, insbesondere mobile Empfangsstation, mit einem Empfänger (RX) zum Empfang eines Empfangssignales (Y), das aus einem über einen Übertragungskanal (CH) kodiert übertragenen Sendesignal (X) hervorgeht und das eine vorgegebene Musterbitfolge (TS) enthält, mit Signalanalysemitteln (EST1, EST2), die mittels der vorgegebenen Musterbitfolge (TS) eine erste Kanalschätzung des Übertragungskanals (CH) ausführen und die eine erste geschätzte Kanalimpulsantwort (H1) ermittelt; mit einer Entzerrstufe (EQ), die das Empfangssignals (Y) mittels der ersten geschätzten Kanalschätzung (H1) entzerrt; mit Signalrekonstruktionsmitteln (RENC, INT), die mittels des entzerrten Empfangssignals ein rekonstruiertes Sendesignal (Xr) bilden; und mit Rechenmitteln, die eine erweiterte Musterbitfolge (TS*), die sowohl Bits der vorgegebene Musterbitfolge (TS) als auch Bits des rekonstruierten Sendesignals (Xr) erzeugen, wobei die Signalanalysemittel (EST2) mittels dieser erweiterten Musterbitfolge (TS*) mindestens eine zweite Kanalschätzung des Übertragungskanals (CH) ausführen und mindestens eine zweite geschätzte Kanalimpulsantwort (H2) ermitteln;
**dadurch gekennzeichnet, dass**
der Empfänger (RX) Synchronisationsmittel (SYNC) enthält, die zumindest die zweite, mittels der erweiterten Musterbitfolge (TS*) geschätzte Kanalimpulsantwort (H2) auswerten und damit die Entzerrstufe (EQ) auf das Empfangssignal (Y) aufsynchronisieren.

Fig. 1a

Fig. 1b

Fig. 1c

**Fig. 2a**

**Fig. 2b**

Fig. 3

A1

EST

Am

EST

COMB

DEC

ENC

B

A

Y'

RRX

EP 1 284 562 A1

EP 1 284 562 A1

**EUROPÄISCHER RECHERCHENBERICHT**

Europäisches Patentamt

Nummer der Anmeldung

EP 01 44 0265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 107 524 A (TEXAS INSTRUMENTS INC) 13. Juni 2001 (2001-06-13) | 1,2,13, 14 | H04L25/02 H04B7/08 |
| Y | * Zusammenfassung * * Seite 5, Absatz 18 - Seite 8, Absatz 33 * * Abbildungen 3,4 * | 8-12 | |
| Y | BABAK H KHALAJ ET AL: "SPATIO-TEMPORAL CHANNEL ESTIMATION TECHNIQUES FOR MULTIPLE ACCESS SPREAD SPECTRUM SYSTEMS WITH ANTENNA ARRAYS" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), NEW YORK, IEEE, US, Bd. 3, 18. Juni 1995 (1995-06-18), Seiten 1520-1524, XP000535015 ISBN: 0-7803-2487-0 * das ganze Dokument * | 8-12 | |
| A | WO 99 60759 A (AGHVAMI ABDOL HAMID ;KING S COLLEGE LONDON (GB); WU JIANJUN (GB)) 25. November 1999 (1999-11-25) * Zusammenfassung * * Seite 1, Zeile 32 - Seite 4, Zeile 30 * * Abbildungen 1-3 * | 1-7 | RECHERCHIERTE SACHGEBIETE (Int.Cl.7) H04L H04B |

Der vorliegende Recherchenbericht wurde für alle Patentansprüche erstellt

| Recherchenort | Abschlußdatum der Recherche | Prüfer |
|---|---|---|
| DEN HAAG | 25. Januar 2002 | Yang, Y |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

14

ANHANG ZUM EUROPÄISCHEN RECHERCHENBERICHT
ÜBER DIE EUROPÄISCHE PATENTANMELDUNG NR.                    EP 01 44 0265

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 1107524 | A | 13-06-2001 | EP | 1107524 A2 | 13-06-2001 |
|  |  |  | JP | 2001211103 A | 03-08-2001 |
| WO 9960759 | A | 25-11-1999 | AU | 3946099 A | 06-12-1999 |
|  |  |  | EP | 1080567 A1 | 07-03-2001 |
|  |  |  | WO | 9960759 A1 | 25-11-1999 |

EPO FORM P0461

Für nähere Einzelheiten zu diesem Anhang : siehe Amtsblatt des Europäischen Patentamts, Nr.12/82